# EUROPEAN PATENT SPECIFICATION

(11) **EP 3 696 018 B1**
(45) Date of publication and mention of the grant of the patent: **16.03.2022**
(21) Application number: 20157425.8
(22) Date of filing: 14.02.2020
(51) Int. Cl.: B60P 3/42

(54) **CARGO SYSTEM**
FRACHTSYSTEM
SYSTÈME DE CARGO

(30) Priority: 15.02.2019 SE 1950185
(43) Date of publication of application: 19.08.2020
(73) Proprietor: Företagsutveckling Gösta Johnsson AB, 430 82 Donsö (SE)
(72) Inventor: JOHNSSON, Gösta, 430 82 DONSÖ (SE)
(74) Representative: Zacco Sweden AB

(56) References cited:
- EP-A1- 0 278 339
- EP-A1- 0 763 459
- WO-A1-01/94153
- NL-C2- 1 001 836

## Description

### TECHNICAL FIELD

The present invention relates to a cargo system for cargo platform, cargo cabinet or container, comprising a compartment for goods in liquid form, wherein the compartment has bellows sides, and wherein the compartment is arranged, so that due to the bellows sides it has a maximum height in the case of filled compartments and a minimum height in the case of empty compartments.

### TECHNICAL BACKGROUND

With cars, lorries, airplanes and vessels, the transportation industry is very energy-consuming and is the largest, single consumer of petroleum products. Since the early 1980s, rationalizations in trade and industry have been aimed at reducing businesses' capital tied up in stocks. The potential thus offered by more efficient utilization of the businesses' capital is very large, and as an example it can be mentioned that a doubling of the stock turnover ratio halves the capital that businesses have tied up in their stocks.

To be able to obtain these stock reductions, a large share of goods transport has been transferred to the roads, as road transport enables a higher frequency in the transportation operations. The work of reducing stocks has resulted in higher traffic intensity on the roads, which again sometimes contributes to traffic congestion. Surveys have shown that a large share of lorries return to their basis terminals without return cargo. There are several reasons for this, and some of the most common reasons are that there is no return cargo available, that the vehicle is not suited for the goods to be transported in the return direction or that some other transport company handles the transports in that directions.

IT technology has paved the way for better coordination, but different types of goods still pose a problem.

SE516704C2 describes an arrangement for cargo platforms for lorries, which comprises a number of compartments for receiving liquid goods, and which allows for loading of other goods on top of compacted compartments. One advantage of this is that some form of liquid can be transported to a first destination, wherein "usual" goods, for example on pallets can subsequently be loaded and transported to another destination or vice versa.

On said cargo platform, a number of cassettes are received along the intended loading surface of the substantially entire cargo platform. The cassettes are formed of armoured folded rubber bellows of the roller type, which are received in a bottom-forming foundation. A moveable cover is arranged to connect the foundation's opening facing upwards for forming a cargo-receiving surface when the covers of the cassettes are closed, and when the rubber bellows are received in the associated foundation.

NL1001836C2 describes a vehicle that incorporates a compartment for solid goods with loading floor which extends a short distance above the bottom of the vehicle from which it is supported by extendable metal strips. The space between the loading floor and the bottom is taken up by a chamber enclosed by a flexible liquid-tight material. The loading floor has a number of openings which give access to the chamber. The flexible chamber can be inflated with a pump mounted in a space under the vehicle. The loading floor will be lifted when the chamber is inflated, after which it can be secured to vertical struts. The pipe through which the chamber is inflated can be used to fill the chamber with liquid.

### SUMMARY OF THE INVENTION

An object of the present invention is to provide an improved cargo system.

This object is obtained with a cargo system for cargo platform, cargo cabinet or container, which comprises a compartment for goods in liquid form, wherein the compartment has bellows sides. The compartment is arranged, by means of the bellows sides, to have a maximum height in the case of filled compartments and a minimum height in the case of empty compartments. Furthermore, the arrangement comprises a rectangular cargo-receiving surface arranged on top of the compartment in such a manner that the height of the cargo surface follows the state of fullness in the compartments with a maximum height in the case of filled compartments and a minimum height in the case of empty compartments, wherein the bellows side comprises rubber and graphene.

One advantage of this is thus that both usual goods and goods in liquid form can be transported at the same time. In other words, it need not be either goods in liquid form or usual goods, but can be both at the same time.

According to a variant of the present invention, the cargo system further comprises one or more compartments for goods in liquid form with a common cargo-receiving surface horizontally arranged on top of the compartments. Preferably, the number of liquid compartments and the size of the respective liquid compartments are adapted in such a manner that they are distributed evenly across the bottom portion of the cargo space. For example, the width of a compartment is preferably adapted to the width of the cargo space and the number of compartments distributed evenly along the length of the cargo space.

According to a variant of the present invention, the cargo system comprises support means at the corners of the cargo-receiving surface. These support means can for example be columns, wherein retainers are arranged at the corners of the cargo-receiving surface and runnably coupled to these columns, so that they primarily keep the cargo-receiving surface in place laterally.

To keep the cargo-receiving surface horizontal, according to one variant, the cargo system comprises a height sensor and a control motor arranged on the respective support means, which height sensors and control motors are coupled to a control unit. This is particularly suitable, if there is cargo on the cargo-receiving surface that is not evenly distributed across the entire surface.

Preferably, the bottom of the compartment or the bottoms of the compartments are bowl-shaped. By providing a tap for liquid deepest down at the bottom of the bowl, it is easy to get all liquid out when emptying.

According to yet another variant of the present invention, the compartment's bellows sides have a circular peripheral shape. This is the most cost-efficient way of having a compartment with a good strength. A rectangular compartment holds more liquid, but at the cost of the strength or the price. An oval cross section is also possible, but that is also more complicated to manufacture and hence more expensive.

Preferably, the diameter of the compartment's bellows sides is reduced from the bottom to the top of the compartment in such a manner that the shape of the compartment is a cone frustum. When the compartment is empty, the compartment adds minimally to the height, and thus the cargo space is maximized. The compartment comprises a plurality of segments with reduced diameters from the bottom to the top. The segments are connected by a flexible material.

Furthermore, the segment diameters are preferably adapted in such a manner that the segments extend in each other from the top of the compartment towards the bottom. Thus, the segment with the smaller diameter of two segments arranged adjacent to one another has an external diameter, which is smaller than the internal diameter of the segment with the larger diameter.

According to the present invention, the bellows sides comprises rubber. Rubber is both relatively strong and flexible. To further increase the strength, the bellows sides comprises graphene.

Further characteristics and advantages of the present invention appear from the following patent claims and associated description. The skilled person will realize that different parts of the present invention can be combined in other ways in addition to the description to form embodiments that differ from those described in the following without deviating from the scope of protection as defined by the claims.

### BRIEF DESCRIPTION OF FIGURES

The above-mentioned and further details as well as advantages of the present invention will be more easily understood in the continued description of examples of embodiments of the present invention with reference to the figures, in which:
Fig. 1 is a side view of a trailer tow,
Fig. 2 is a schematic side view of a trailer tow with compartments,
Fig. 3 is a schematic side view of a trailer tow with filled compartments and cargo-receiving surface,
Fig. 4 is a schematic side view of a trailer tow with partially filled compartments and cargo-receiving surface,
Fig. 5 is a schematic view from the rear of a trailer tow with compartments, and
Fig. 6 is a schematic view from the rear of a trailer tow with compartments and cargo-receiving surface.

### DESCRIPTION OF EXEMPLARY EMBODIMENTS ACCORDING TO THE INVENTION

In the following, the invention will be described in more detail with reference to the associated figures, in which exemplary embodiments are shown. However, the invention can be configured in many different ways and should not be seen as limited to the examples shown. The same reference numeral refers to the same or similar parts of the invention throughout the description.

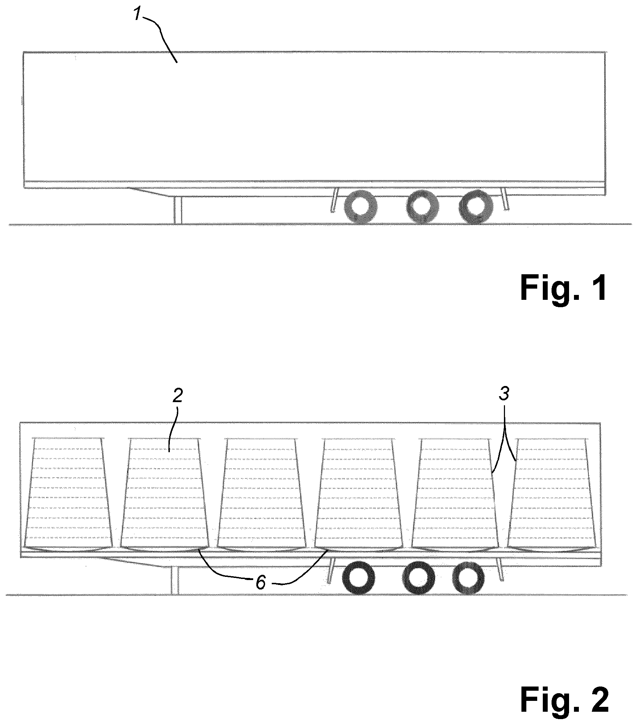

With reference to the exemplary embodiment in Fig. 1, a trailer tow of standard type with cargo cabinet 1 is shown.

Fig. 2 shows the same trailer tow as in Fig. 1, but here in a schematic cross section with six units of compartments 2. The bowl-shaped bottom portions 6 are also shown. Deepest down in the bowl-shaped bottom portions 6, outlets are conveniently arranged, and preferably these outlets are coupled together if all compartments 2 are intended for the same fluid.

An alternative is to arrange a coupling system, so that different compartments 2 can optionally be combined.

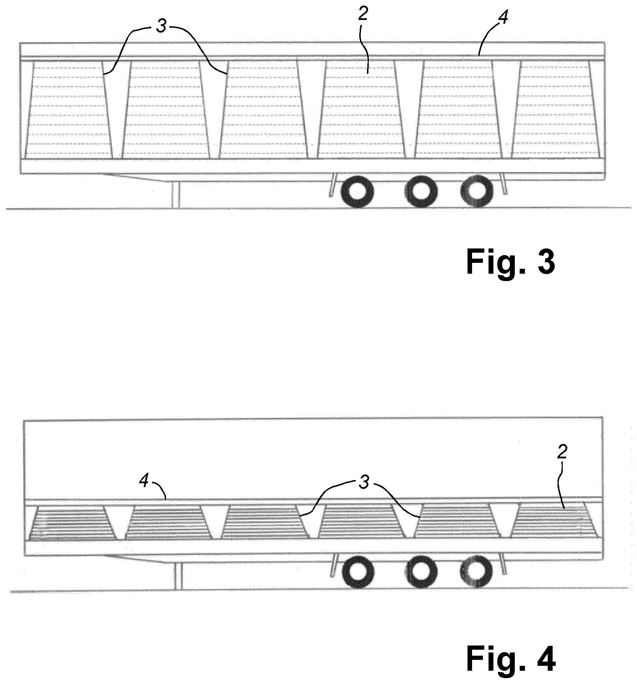

Fig. 3 shows an example of an arrangement according to the present invention. In the shown example, there are six units of compartments 2, and on top of these compartments, a cargo-receiving surface 4 is arranged. Fig. 3 is to illustrate a state, wherein the compartments 2 are filled or at least almost completely filled. The cargo-receiving surface 4 is thus in Fig. 3 relatively high up in the cabinet 1.

When there is only little liquid left in the compartments 2, as shown in Fig. 4, the cargo-receiving surface 4 is consequently lower down, implying that it is easier to load usual goods on the cargo-receiving surface 4 on top of the compartments 2. The exact relationship between the height of the compartments 2 and hence the cargo-receiving surface 4 in event of completely filled compartments 2 versus the cabinet height can of course be adapted from the cargo-receiving surface 4 being in contact with the cabinet (1) ceiling to there always being loading volume on the cargo-receiving surface 4, even if the compartments 2 are completely filled.

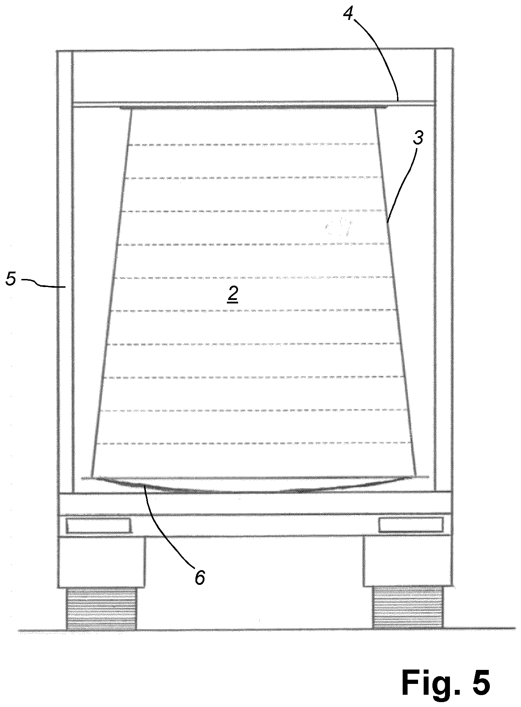

Fig. 5 schematically shows the cabinet 1 from the rear with a visible compartment 2 and its bowl-shaped bottom 6. Furthermore, the support means 5 are shown, along which the cargo-receiving surface 4 is moved in height at emptying or filling of the compartments 2.

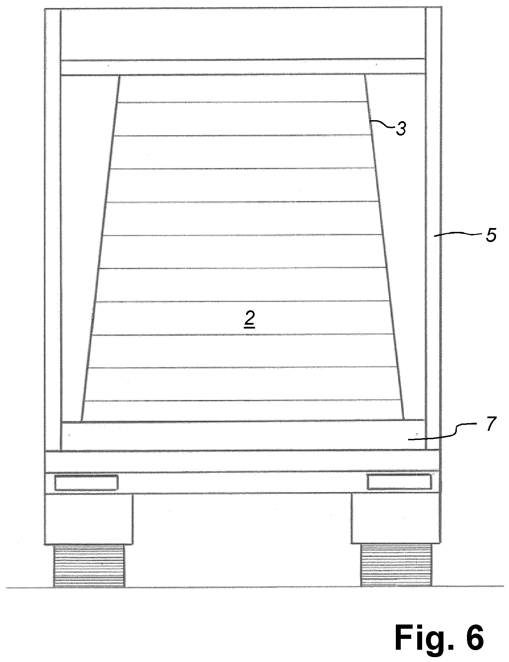

When the compartments 2 are empty, and they are provided with bellows sides 3 that narrow towards the middle along the height of the compartments 2, they can be hidden completely by means of a base 7, see Fig. 6; in the cabinet 1. Moreover, this construction implies that when the compartments 2 are empty, they take up minimal volume, and thereby the loading volume on top of them is maximized.

The present invention is not limited to the embodiments described above and shown in the figures. The skilled person will realize that many variants and modifications can be made within the scope of protection defined by the following claims. For example, the figures show a cargo cabinet on a trailer tow, but the principle of the invention may as well be used in a container or cargo cabinet/cargo platform on a lorry or a lorry tow.

## Claims

1. A cargo system for cargo platform, cargo cabinet (1) or container, comprising a compartment (2) for goods in liquid form, wherein the compartment has bellows sides (3), and wherein the compartment (2) is arranged, so that due to the bellows sides (3) it has a maximum height in the case of filled compartments and a minimum height in the case of empty compartments, wherein the arrangement further comprises a rectangular cargo-receiving surface (4) horizontally arranged on top of the compartment (2) in such a manner that the height of the cargo-receiving surface follows the state of fullness in the compartment with a maximum height in the case of filled compartments and a minimum height in the case of empty compartments, **characterized in that**
the bellows sides (3) comprise rubber and graphene.

2. A cargo system according to claim 1, further comprising one or more compartments (2) for goods in liquid form with a common cargo-receiving surface (4) horizontally arranged on top of the compartments (2).

3. A cargo system according to any one of claims 1 and 2, further comprising support means (5) arranged at the corners of the cargo-receiving surface.

4. A cargo system according to claim 3, wherein a height sensor and a control motor are arranged on the respective support means (5), which height sensors and control motors are coupled to a control unit.

5. A cargo system according to any one of the preceding claims, wherein the bottom (6) of the compartment is bowl-shaped.

6. A cargo system according to any one of the preceding claims, wherein the bellows sides (3) of the compartment has a circular peripheral shape.

7. A cargo system according to claim 6, wherein the diameter of the compartment bellows sides (3) is reduced from the bottom to the top of the compartment (2) in such a manner that the shape of the compartment is a cone frustum.

8. A cargo system according to claim 7, wherein the compartment comprises a plurality of segments with reduced diameter from the bottom to the top, and wherein the segments are connected by a flexible material.

9. A cargo system according to claim 8, wherein a segment with smaller diameter of two segments arranged adjacent to one another has an external diameter, which is smaller than the internal diameter of the segment with the larger diameter.

## Patentansprüche

1. Frachtsystem für eine Frachtplattform, ein Frachtkabinett (1) oder einen Frachtcontainer, umfassend einen Raum (2) für Waren in flüssiger Form, wobei der Raum Balgseiten (3) aufweist, und wobei der Raum (2) derart ausgelegt ist, dass er wegen der Balgseiten (3) eine Maximalhöhe im Falle von gefüllten Räumen und eine Minimumhöhe im Falle von leeren Räumen aufweist, wobei die Vorrichtung ferner eine rechteckige Frachtaufnahmefläche (4) umfasst, die oben auf dem Raum (2) in einer solchen Weise horizontal angeordnet ist, dass die Höhe der Frachtaufnahmefläche dem Füllzustand in dem Raum mit einer Maximalhöhe im Falle von gefüllten Räumen und einer Minimumhöhe im Falle von leeren Räumen folgt,
**dadurch gekennzeichnet, dass**
die Balgseiten (3) Kautschuk und Graphen umfassen.

2. Frachtsystem nach Anspruch 1, ferner umfassend einen Raum oder mehrere Räume (2) für Waren in flüssiger Form mit einer gemeinsamen Frachtaufnahmefläche (4), die oben auf den Räumen (2) horizontal angeordnet ist.

3. Frachtsystem nach einem der Ansprüche 1 bis 2, ferner umfassend Stützorgane (5), die in den Ecken der Frachtaufnahmefläche angeordnet sind.

4. Frachtsystem nach Anspruch 3, wobei ein Höhensensor und ein Steuermotor an den jeweiligen Stützorganen (5) angeordnet sind, welche Höhensensoren und Steuermotoren mit einer Steuereinheit verbunden sind.

5. Frachtsystem nach einem der vorgehenden Ansprüche, wobei der Boden (6) des Raums schalenförmig ist.

6. Frachtsystem nach einem der vorgehenden Ansprüche, wobei die Balgseiten (3) des Raums eine kreisförmige periphere Form aufweisen.

7. Frachtsystem nach Anspruch 6, wobei der Durchmesser der Balgseiten (3) des Raums vom Boden bis zum oberen Teil des Raums (2) derart reduziert ist, dass die Form des Raums ein Kegelstumpf ist.

8. Frachtsystem nach Anspruch 7, wobei der Raum eine Mehrzahl von Segmenten mit reduziertem Durchmesser vom Boden bis zum oberen Teil umfasst, und wobei die Segmente durch ein flexibles Material verbunden sind.

9. Frachtsystem nach Anspruch 8, wobei ein Segment mit kleinerem Durchmesser von zwei benachbart angeordneten Segmenten einen Außendurchmesser aufweist, der kleiner als der Innendurchmesser des Segments mit dem größeren Durchmesser ist.

## Revendications

1. Système de chargement pour une plateforme de chargement, une armoire de chargement (1) ou un récipient, comprenant un compartiment (2) pour des marchandises sous forme liquide, le compartiment ayant des côtés de soufflet (3), et le compartiment (2) étant agencé, de sorte qu'en raison aux côtés de soufflet (3) il a une hauteur maximale dans le cas de compartiments remplis et une hauteur minimale dans le cas de compartiments vides,
dans lequel l'agencement comprend en outre une surface de réception de chargement rectangulaire (4) disposée horizontalement au-dessus du compartiment (2) de telle manière que la hauteur de la surface de réception de chargement suit l'état de remplissage dans le compartiment avec une hauteur maximale dans le cas de compartiments remplis et une hauteur minimale dans le cas de compartiments vides,
**caractérisé en ce que**
les côtés de soufflet (3) comprennent du caoutchouc et du graphène.

2. Système de chargement selon la revendication 1, comprenant en outre un ou plusieurs compartiments (2) pour des marchandises sous forme liquide avec une surface commune de réception de chargement (4) disposée horizontalement au-dessus des compartiments (2).

3. Système de chargement selon l'une quelconque des revendications 1 et 2, comprenant en outre des moyens de support (5) agencés aux coins de la surface de réception de chargement.

4. Système de chargement selon la revendication 3, dans lequel un capteur de hauteur et un moteur de commande sont agencés sur les moyens de support respectifs (5), lesquels capteurs de hauteur et moteurs de commande sont couplés à une unité de commande.

5. Système de chargement selon l'une quelconque des revendications précédentes, dans lequel le fond (6) du compartiment est en forme de bol.

6. Système de chargement selon l'une quelconque des revendications précédentes, dans lequel les côtés de soufflet (3) du compartiment présentent une forme périphérique circulaire.

7. Système de chargement selon la revendication 6, dans lequel le diamètre des côtés de soufflet de compartiment (3) est réduit du bas vers le haut du compartiment (2) de telle manière que la forme du compartiment est un tronc de cône.

8. Système de chargement selon la revendication 7, dans lequel le compartiment comprend une pluralité de segments avec un diamètre réduit du bas vers le haut, et dans lequel les segments sont reliés par un matériau flexible.

9. Système de chargement selon la revendication 8, dans lequel un segment ayant un diamètre le plus petit de deux segments agencés adjacents l'un à l'autre présente un diamètre externe qui est inférieur au diamètre interne du segment ayant le plus grand diamètre.
